# EUROPÄISCHE PATENTSCHRIFT

(11) **EP 3 715 051 B1**
(45) Veröffentlichungstag und Bekanntmachung des Hinweises auf die Patenterteilung: **03.04.2024**
(21) Anmeldenummer: 20187633.1
(22) Anmeldetag: 24.07.2020
(51) Int. Cl.: B23Q 39/04, B23Q 1/01

(54) **WERKZEUGMASCHINE UND VERFAHREN ZUM BETREIBEN DER WERKZEUGMASCHINE**
MACHINE TOOL AND METHOD FOR OPERATING SAME
MACHINE-OUTIL ET PROCÉDÉ DE FONCTIONNEMENT DE LA MACHINE-OUTIL

(43) Veröffentlichungstag der Anmeldung: 30.09.2020
(73) Patentinhaber: Fill Gesellschaft m.b.H., 4942 Gurten (AT)
(72) Erfinder: GADRINGER, Markus, 4942 Gurten (AT); DALLINGER, Friedrich, 4942 Gurten (AT)
(74) Vertreter: Burger, Hannes

(56) Entgegenhaltungen:
- EP-A1- 1 122 027
- EP-A1- 1 695 791
- EP-A2- 1 402 991
- DE-U1- 29 907 963
- JP-A- H02 279 249
- JP-A- S62 218 007
- JP-A- S62 218 008
- JP-U- S63 110 336
- US-B1- 6 203 478

## Beschreibung

Die Erfindung betrifft eine Werkzeugmaschine, sowie ein Verfahren zum Betreiben der Werkzeugmaschine und eine Bearbeitungsanlage umfassend zumindest zwei Werkzeugmaschinen.

Aus der WO 2005/025801 A1 und der WO 00/37213 A2 sind sogenannte Doppelspindelmaschinen bekannt. Bei derartigen Doppelspindelmaschinen können zwei Werkstücke gleichzeitig mittels jeweils eines in die Werkzeugspindeln eingesetzten Werkzeuges bearbeitet werden. Beide Werkzeugspindeln und damit auch beide Werkzeuge werden synchron in den drei Achsen des Koordinatensystems verfahren, so dass an den beiden Werkstücken identische Bearbeitungsvorgänge ablaufen.

Die aus der WO 2005/025801 A1 und der WO 00/37213 A2 bekannten Doppelspindelmaschinen weisen den Nachteil auf, dass aufgrund deren Aufbau die maximale Länge des Werkstückes, welches bearbeitet werden kann, begrenzt ist.

Ein als D 10a im Erteilungsverfahren geführtes Bild zeigt die Werkzeugmaschine "Xflex Twin" der Firma Etxetar, so wie es auf der Webseite etxetar.com am 01-06-2020 zu sehen war. Ein als D10b im Erteilungsverfahren geführtes Bild zeigt ein erstes Paar an übereinander angeordneten Arbeitsspindeln und ein zweites Paar an übereinander angeordneten Arbeitsspindeln, so wie es auf der Webseite etxetar.com am 18-03-2020 zu sehen war. Ein als D10c im Erteilungsverfahren geführtes Bild zeigt übereinander angeordnete Arbeitsspindeln, so wie es auf der Webseite etxetar.com am 15-10-2019 zu sehen war. Ein als D10d im Erteilungsverfahren geführtes Bild zeigt zwei nebeneinander angeordnete Arbeitsspindeln, so wie es auf der Webseite etxetar.com am 15-10-2019 zu sehen war.

Aufgabe der vorliegenden Erfindung war es, die Nachteile des Standes der Technik zu überwinden und eine verbesserte Werkzeugmaschine, sowie ein verbessertes Verfahren zum Betreiben der Werkzeugmaschine, sowie eine verbesserte Bearbeitungsanlage zur Verfügung zu stellen.

Diese Aufgabe wird durch eine Vorrichtung und ein Verfahren gemäß den Ansprüchen gelöst.

Erfindungsgemäß ist eine Werkzeugmaschine ausgebildet. Die Werkzeugmaschine umfasst:
ein Maschinengestell;
zumindest eine erste Arbeitsspindel, welche um eine erste Spindelachse drehbar gelagert ist; zumindest eine zweite Arbeitsspindel, welche um eine zweite Spindelachse drehbar gelagert ist;
eine Werkstückspannvorrichtung, welche zum Aufnehmen zumindest eines ersten Werkstückes und eines zweiten Werkstückes ausgebildet ist. Die erste Arbeitsspindel und die zweite Arbeitsspindel sind vertikal übereinander angeordnet.

Die erfindungsgemäße Werkzeugmaschine bringt den Vorteil mit sich, dass lange Werkstücke mit hoher Effizienz einfach bearbeitet werden können.

Weiters kann es zweckmäßig sein, wenn die erste Arbeitsspindel und die zweite Arbeitsspindel an einer gemeinsamen Spindelverstellvorrichtung angeordnet sind und gemeinsam in einer parallel zu den Spindelachsen ausgerichteten Z-Achse verschiebbar sind. Dies bringt den Vorteil mit sich, dass die erste Arbeitsspindel und die zweite Arbeitsspindel mittels eines gemeinsamen Antriebes verschoben werden können. Dadurch kann der Aufbau der Werkzeugmaschine vereinfacht werden.

Alternativ kann vorgesehen sein, dass die erste Arbeitsspindel mittels einer ersten Spindelverstellvorrichtung in der Z-Achse verschiebbar ist und dass die zweite Arbeitsspindel mittels einer zweiten Spindelverstellvorrichtung in der Z-Achse verschiebbar ist, wobei die erste Arbeitsspindel und die zweite Arbeitsspindel unabhängig voneinander verschiebbar sind. Dies bringt den Vorteil mit sich, dass die erste Arbeitsspindel und die zweite Arbeitsspindel voneinander unabhängige Bearbeitungen durchführen können, sodass zwei unterschiedlich ausgebildete Werkstücke gleichzeitig in der Werkzeugmaschine bearbeitet werden können.

Weiters kann vorgesehen sein, dass die erste Arbeitsspindel und/oder die zweite Arbeitsspindel mittels einer Schwenklagerung schwenkbar bezüglich dem Maschinengestell an diesem angeordnet sind. Somit können die erste Spindelachse bzw. die zweite Spindelachse aus der horizontalen Lage in eine winkelig davon abweichende Lage schwenkbar sein.

Darüber hinaus kann vorgesehen sein, dass zusätzlich zur ersten Arbeitsspindel und zur zweiten Arbeitsspindel eine dritte Arbeitsspindel ausgebildet ist, wobei die erste Arbeitsspindel, die zweite Arbeitsspindel und die dritte Arbeitsspindel vertikal übereinander angeordnet sind.

Dies bringt den Vorteil mit sich, dass die Effizienz der Werkzeugmaschine weiter erhöht werden kann.

Erfindungsgemäß ist vorgesehen, dass die Werkstückspannvorrichtung zumindest einen ersten Werkstücktisch und einen zweiten Werkstücktisch umfasst, wobei der erste Werkstücktisch um eine erste Schwenkachse, welche parallel zu einer horizontalen X-Achse ausgerichtet ist, schwenkbar gelagert ist und der zweite Werkstücktisch um eine zweite Schwenkachse, welche parallel zur X-Achse ausgerichtet ist, schwenkbar gelagert ist und dass die erste Arbeitsspindel dem ersten Werkstücktisch zugeordnet ist und die zweite Arbeitsspindel dem zweiten Werkstücktisch zugeordnet ist. Dies bringt den Vorteil mit sich, dass das zu bearbeitende Werkstück bzw. die zu bearbeitenden Werkstücke mit einer hohen Genauigkeit und einer guten Effizienz bearbeitet werden können.

Gemäß einer Weiterbildung ist es möglich, dass die Werkstückspannvorrichtung zumindest einen ersten rückwärtigen Werkstücktisch und einen zweiten rückwärtigen Werkstücktisch umfasst, wobei der erste rückwärtige Werkstücktisch um eine erste rückwärtige Schwenkachse, welche parallel zu einer horizontalen X-Achse ausgerichtet ist, schwenkbar gelagert ist und der zweite rückwärtige Werkstücktisch um eine zweite rückwärtige Schwenkachse , welche parallel zur X-Achse ausgerichtet ist, schwenkbar gelagert ist und dass der erste Werkstücktisch und der zweite Werkstücktisch an einer ersten Seite einer Schwenkbrücke, welche um eine parallel zur X-Achse ausgerichtete Schwenkbrückenachse schwenkbar gelagert ist, angeordnet sind und dass der erste rückwärtige Werkstücktisch und der zweite rückwärtige Werkstücktisch an einer zweiten Seite der Schwenkbrücke angeordnet sind, wobei je nach Schwenkstellung der Schwenkbrücke
die erste Arbeitsspindel dem ersten Werkstücktisch zugeordnet ist und die zweite Arbeitsspindel dem zweiten Werkstücktisch zugeordnet ist oder
die erste Arbeitsspindel dem ersten rückwärtigen Werkstücktisch zugeordnet ist und die zweite Arbeitsspindel dem zweiten rückwärtigen Werkstücktisch zugeordnet ist. Dies bringt den Vorteil mit sich, dass am ersten Werkstücktisch bzw. am zweiten Werkstücktisch gespannte Werkstücke bearbeitet werden können, währenddessen am ersten rückwertigen Werkzeugtisch bzw. am zweiten rückwärtigen Werkzeugtisch die bereits bearbeiteten Werkstücke entnommen werden und neue Werkstückrohlinge eingesetzt werden. Somit kann die Effizienz der Werkzeugmaschine weiter erhöht werden. Eine derartige Ausgestaltung der Werkstückspannvorrichtung in Verbindung mit den vertikal übereinander angeordneten ersten Arbeitsspindel und zweiten Arbeitsspindel bringt überraschende Vorteile in der Zugänglichkeit und somit in der Austauschbarkeit der bereits bearbeiteten Werkstücke mit sich.

Insbesondere kann vorgesehen sein, dass zum Wechseln der Werkstücke die Schwenkbrücke in einer derartigen Schwenkstellung positioniert wird, dass der erste Werkstücktisch und der zweite Werkstücktisch in einem horizontalen Abstand nebeneinander angeordnet sind. Dies bringt den Vorteil mit sich, dass die Werkstücke einfach gewechselt werden können. Insbesondere können hierbei Hebezeuge, wie etwa Ketten oder sonstige Zugmittel zum Wechseln der Werkstücke verwendet werden, welche ausschließlich Zugkräfte aufnehmen können. Außerdem sind durch diese Maßnahme die Werkstücktische für eine Werkstückwechselvorrichtung zugänglich, welche überkopf angeordnet ist. Dies kann beispielsweise eine schienengeführte Werkstückwechselvorrichtung sein.

Ferner kann es zweckmäßig sein, wenn die Schwenkbrückenachse zentral zwischen der ersten Schwenkachse, der zweiten Schwenkachse, der ersten rückwärtigen Schwenkachse und der zweiten rückwärtigen Schwenkachse angeordnet ist. Dies bringt den Vorteil mit sich, dass der erste Werkstücktisch und der erste rückwärtige Werkstücktisch bzw. der zweite Werkstücktisch und der zweite rückwärtige Werkstücktisch, wenn sie in den Bearbeitungsraum der Werkzeugmaschine eingeschwenkt sind, die gleiche Position einnehmen und somit die Bearbeitung der Werkstücke ohne einer etwaig notwendigen Kompensation der Lage der Arbeitsspindeln bzw. der Schwenkbrücke durchgeführt werden kann.

Darüber hinaus kann vorgesehen sein, dass zwischen der ersten Seite der Schwenkbrücke und der zweiten Seite der Schwenkbrücke eine Trennwand ausgebildet ist, wobei im Bearbeitungszustand der Werkzeugmaschine durch die Trennwand ein Arbeitsraum der Werkzeugmaschine von einem Außenbereich der Werkzeugmaschine abgetrennt ist. Dies bringt den Vorteil mit sich, dass durch die Trennwand der Arbeitsraum der Werkzeugmaschine abgeschlossen werden kann, sodass die Maschinensicherheit der Werkzeugmaschine erhöht werden kann. Darüber hinaus kann durch diese Maßnahme die Schallemission der Werkzeugmaschine verringert werden.

Weiters kann vorgesehen sein, dass ein Abstand zwischen der ersten Arbeitsspindel und der zweiten Arbeitsspindel mittels einer Spindelabstandskompensationsvorrichtung in einer vertikalen Y-Achse verstellbar ist. Dies bringt den Vorteil mit sich, dass etwaige Wärmedehnungen der Werkzeugmaschine ausgeglichen werden können, sodass die Relativposition der ersten Arbeitsspindel zum ersten Werkstücktisch und der zweiten Arbeitsspindel zum zweiten Werkstücktisch während dem gesamten Bearbeitungsvorgang der Werkzeugmaschine gleich groß ist.

Gemäß einer besonderen Ausprägung ist es möglich, dass an einem Längsende der Werkstückspannvorrichtung ein Werkzeugmagazin angeordnet ist, wobei das Werkzeugmagazin ein Kettenumlaufmagazin umfasst, wobei ein gerades Trum des Kettenumlaufmagazines vertikal ausgerichtet ist, wobei die erste Arbeitsspindel und die zweite Arbeitsspindel zum geraden Trum des Kettenumlaufmagazines verschiebbar sind, wobei ein Abstand zwischen der ersten Arbeitsspindel und der zweiten Arbeitsspindel einer Teilung oder einem Vielfachen der Teilung des Kettenumlaufmagazines entspricht. Hierbei ist von Vorteil, dass die erste Arbeitsspindel und die zweite Arbeitsspindel zum Kettenumlaufmagazin bewegt werden können, um das nicht mehr benötigte Arbeitswerkzeug ablegen und ein neues Bearbeitungswerkzeug aufnehmen zu können. Dadurch dass der Abstand zwischen der ersten Arbeitsspindel und der zweiten Arbeitsspindel einer Teilung oder einer Vielfachen einer Teilung des Kettenumlaufmagazins entspricht, können die in der ersten Arbeitsspindel und zweiten Arbeitsspindel aufgenommenen Bearbeitungswerkzeuge gleichzeitig abgelegt bzw. in einem breiteren Schritt gleichzeitig neue Bearbeitungswerkzeuge aufgenommen werden.

Als alternative Ausführungsvariante zu einem geraden Trum des Kettenumlaufmagazines im Bereich der beiden Arbeitsspindeln kann auch vorgesehen sein, dass das Kettenumlaufmagazin zwischen den beiden Arbeitsspindeln eine von der Geraden abweichende Führungsbahn, wie etwa eine Krümmung oder eine Omegaförmige oder trapetzförmige Kettenbahn aufweist. Somit muss ein Abstand zwischen der ersten Arbeitsspindel und der zweiten Arbeitsspindel nicht einer Teilung oder einem Vielfachen der Teilung des Kettenumlaufmagazines entsprechen, sondern kann auch eine davon unterschiedliche Teilung gewählt werden. Auch hierbei kann vorgesehen sein, dass die Teilung des Kettenumlaufmagazines so gewählt wird, dass die jeweiligen Bereitstellungspositionen des Kettenumlaufmagazines im Abstand zwischen der ersten Arbeitsspindel und der zweiten Arbeitsspindel angeordnet sind.

Erfindungsgemäß ist ein Verfahren zum Betreiben einer Werkzeugmaschine vorgesehen. Die Werkzeugmaschine umfasst ein Maschinengestell, eine erste Arbeitsspindel, welche um eine erste Spindelachse drehbar gelagert ist, zumindest eine zweite Arbeitsspindel, welche um eine zweite Spindelachse drehbar gelagert ist und eine Werkstückspannvorrichtung, welche zum Aufnehmen zumindest eines ersten Werkstückes und eines zweiten Werkstückes ausgebildet ist, wobei die erste Arbeitsspindel und die zweite Arbeitsspindel vertikal übereinander angeordnet sind. Das Verfahren umfasst die Verfahrensschritte:
- Bearbeiten des ersten Werkstückes mittels der ersten Arbeitsspindel;
- Bearbeiten des zweiten Werkstückes mittels der zweiten Arbeitsspindel.
Das Bearbeiten des ersten Werkstückes und das Bearbeiten des zweiten Werkstückes erfolgt zeitgleich.

Das erfindungsgemäße Verfahren bringt den Vorteil mit sich, dass lange Werkstücke mit hoher Effizienz einfach bearbeitet werden können.

Insbesondere kann es vorteilhaft sein, wenn ein Wechseln des in der ersten Arbeitsspindel gespannten Bearbeitungswerkzeuges und ein Wechseln des in der zweiten Arbeitsspindel gespannten Bearbeitungswerkzeuges zeitgleich erfolgt, wobei die Bearbeitungswerkzeuge in einem Kettenumlaufmagazin mit mehreren Bearbeitungswerkzeugaufnahmen aufgenommen sind, wobei jene Bearbeitungswerkzeuge, welche in jenen Bearbeitungswerkzeugaufnahmen angeordnet sind, die dem Abstand zwischen der ersten Arbeitsspindel und der zweiten Arbeitsspindel entsprechen, baugleich ausgebildet sind, wobei in einem ersten Verfahrensschritt das in der ersten Arbeitsspindel gespannte Bearbeitungswerkzeug und das in der zweiten Arbeitsspindel gespannte Bearbeitungswerkzeug jeweils in eine freie Bearbeitungswerkzeugaufnahme des Kettenumlaufmagazines abgelegt werden und in einem zweiten Verfahrensschritt das Kettenumlaufmagazin oder die beiden Arbeitsspindeln verschoben werden, sodass die erste Arbeitsspindel und die zweite Arbeitsspindel mit den neu aufzunehmenden Bearbeitungswerkzeugen ausgerichtet sind und wobei in einem dritten Verfahrensschritt die neu aufzunehmenden Bearbeitungswerkzeuge in die erste Arbeitsspindel und in die zweite Arbeitsspindel aufgenommen werden. Durch diese Maßnahme kann die Rüstzeit verkürzt werden, wobei die Effizienz der Werkzeugmaschine weiter verbessert werden kann.

Erfindungsgemäß ist eine Bearbeitungsanlage ausgebildet, welche zumindest zwei Werkzeugmaschinen umfasst, wobei für beide Werkzeugmaschinen eine gemeinsame Steuerungstechnik und/oder eine gemeinsame Medienversorgung ausgebildet ist.

Die erfindungsgemäße Bearbeitungsanlage bringt den Vorteil mit sich, dass durch die gemeinsame Nutzung der Steuerungstechnik und/oder der gemeinsamen Medienversorgung die Bearbeitungsanlage einfach und somit effizient und wenig fehleranfällig gehalten werden kann.

Darüber hinaus kann vorgesehen sein, dass die beiden Werkzeugmaschinen gespiegelt zueinander ausgebildet sind. Dies bringt den Vorteil mit sich, dass die Steuerungstechnik oder die gemeinsame Medienversorgung zentral zwischen den beiden Werkzeugmaschinen angeordnet sein kann, wobei innerhalb der Werkzeugmaschinen die gleiche Leitungslänge von der gemeinsamen Steuerungstechnik und/oder der gemeinsamen Medienversorgung zu den jeweiligen Aktoren bzw. Medienausgängen bereitgestellt werden kann.

Vorteilhaft ist auch eine Ausprägung, gemäß welcher vorgesehen sein kann, dass die beiden Werkzeugmaschinen synchron zueinander betrieben werden. Dies bringt den Vorteil mit sich, dass die erste Werkzeugmaschine und die zweite Werkzeugmaschine durch gemeinsame Steuerbefehle angesteuert werden können, wodurch die Effizienz der Bearbeitungsanlage erhöht werden kann.

In einer alternativen Ausführungsvariante kann auch vorgesehen sein, dass die beiden Werkzeugmaschinen phasenversetzt zueinander betrieben werden. Das heißt grundsätzlich können sie dieselben Bearbeitungsschritte durchführen, jedoch mit einem zeitlichen Versatz zueinander. Dies bringt den Vorteil mit sich, dass Verzögerungsenergie aus dem Rekuperierenden Betrieb von Achsen und/oder Spindeln der ersten Werkzeugmaschine für Beschleunigungsenergie für Achsen und/oder Spindeln der zweiten Werkzeugmaschine herangezogen werden kann.

Eine gespiegelte Ausbildung von zwei nebeneinander aufgestellten Werkzeugmaschinen bringt den Vorteil mit sich, dass zentral zwischen den beiden Werkzeugmaschinen gemeinsam genutzte Komponenten, wie etwa eine zentrale Steuerung, eine Kühlmittelpumpe, ein Kühlmitteltank, eine Druckluftversorgung usw. ausgebildet sein können.

Das die beiden Werkzeugmaschinen synchron zueinander betrieben werden, kann bei einer Aufstellung von zwei baugleichen Werkzeugmaschinen nebeneinander bedeuten, dass diese tatsächlich alle Verfahrbewegungen ident ausführen. Die Bewegungen können hierbei durch eine gemeinsame, zentral angeordnete, Steuerung vorgegeben werden. Bei einer gespiegelten Ausführung der zwei Werkzeugmaschinen, kann ein synchroner Betrieb der Werkzeugmaschinen bedeuten, dass die Bewegungen in den Werkzeugmaschinen gegengleich durchgeführt werden.

In einer alternativen Ausführung ist es natürlich auch denkbar, dass die zwei Werkzeugmaschinen, welche nebeneinander angeordnet sind, nicht synchron zueinander betrieben werden, sondern dass jede der beiden Werkzeugmaschinen unabhängig voneinander Bearbeitungsvorgänge durchführt und dass die beiden Werkzeugmaschinen trotzdem Komponenten, wie etwa eine zentrale Steuerung, eine Kühlmittelpumpe, ein Kühlmitteltank, eine Druckluftversorgung usw. gemeinsam nutzt.

Ein Bearbeitungswerkzeug im Sinne dieses Dokumentes kann beispielsweise ein spanabhebendes Bearbeitungswerkzeug sein. Ein Bearbeitungswerkzeug im Sinne dieses Dokumentes kann beispielsweise auch ein Reibrührschweißwerkzeug sein. Im Weitesten Sinne kann als Bearbeitungswerkzeug auch ein in der Arbeitsspindel aufgenommenes Messmittel oder Prüfmittel gesehen werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer Werkzeugmaschine;
- Fig. 2: eine Seitenansicht eines weiteren Ausführungsbeispiels der Werkzeugmaschine mit drei Arbeitsspindeln;
- Fig. 3: eine perspektivische Ansicht eines weiteren Ausführungsbeispiels der Werkzeugmaschine mit einer Schwenkbrücke;
- Fig. 4: eine perspektivische Ansicht eines weiteren Ausführungsbeispiels der Werkzeugmaschine mit einem Kettenumlaufmagazin;
- Fig. 5: eine schematische Darstellung eines Ausführungsbeispiels einer Bearbeitungsanlage mit zwei nebeneinander angeordneten Werkzeugmaschinen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

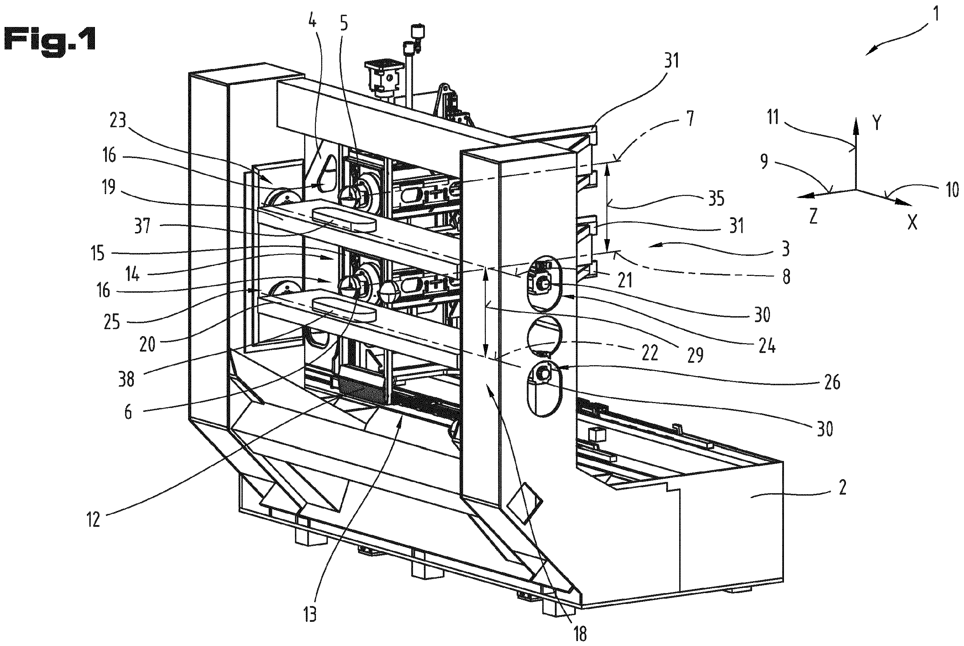

Fig. 1 zeigt eine schematische Darstellung einer Werkzeugmaschine 1 zur spanabhebenden Bearbeitung von Werkstücken 32, 33. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus dient das Maschinengestell 2 natürlich zur Aufnahme sämtlicher Bauteile der Werkzeugmaschine 1.

Weiters ist eine Spindelverstellvorrichtung 3 ausgebildet, welche am Maschinengestell 2 angeordnet ist bzw. mit diesem gekoppelt ist. Die Spindelverstellvorrichtung 3 weist einen Arbeitskopf 4 auf, an welchem eine erste Arbeitsspindel 5 und eine zweite Arbeitsspindel 6 gelagert sind. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs und weisen hierzu eine Spannvorrichtung zur Aufnahme des Bearbeitungswerkzeuges auf.

Die Arbeitsspindeln 5, 6 sind mittels der Spindelverstellvorrichtung 3 in einer Z-Achse 9, in einer X-Achse 10 und in einer im rechten Winkel zur Z-Achse 9 und X-Achse 10 angeordneten Y-Achse 11 relativ zum Maschinengestell 2 verstellbar. Insbesondere kann vorgesehen sein, dass die Z-Achse 9 horizontal angeordnet ist. Die Z-Achse 9 ist parallel zur ersten Spindelachse 7 und zur zweiten Spindelachse 8 angeordnet. Weiters kann vorgesehen sein, dass die X-Achse 10 ebenfalls horizontal angeordnet ist. Die X-Achse 10 ist im rechten Winkel zur Z-Achse 9 angeordnet.

Die Spindelverstellvorrichtung 3 weist eine Hauptverstelleinheit 12 auf, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier oder auch mehr Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Y-Achsen-Linearführung 15 mit der Hauptverstelleinheit 12 gekoppelt ist. Durch die Y-Achsen-Linearführung 15 ist die Höhenverstelleinheit 14 entlang der Y-Achse 11 relativ zur Hauptverstelleinheit 12 bzw. relativ zum Maschinengestell 2 verschiebbar.

In einer ersten, in Fig. 1 dargestellten Ausführungsvariante, kann vorgesehen sein, dass die erste Arbeitsspindel 5 und die zweite Arbeitsspindel 6 jeweils an einer eigenen Höhenverstelleinheit 14 angeordnet sind und somit unabhängig voneinander entlang einer Y-Achse 11 verschiebbar sind. Bei dieser Ausführungsvariante wird für jede der Höhenverstelleinheiten 14 ein eigener Antrieb benötigt.

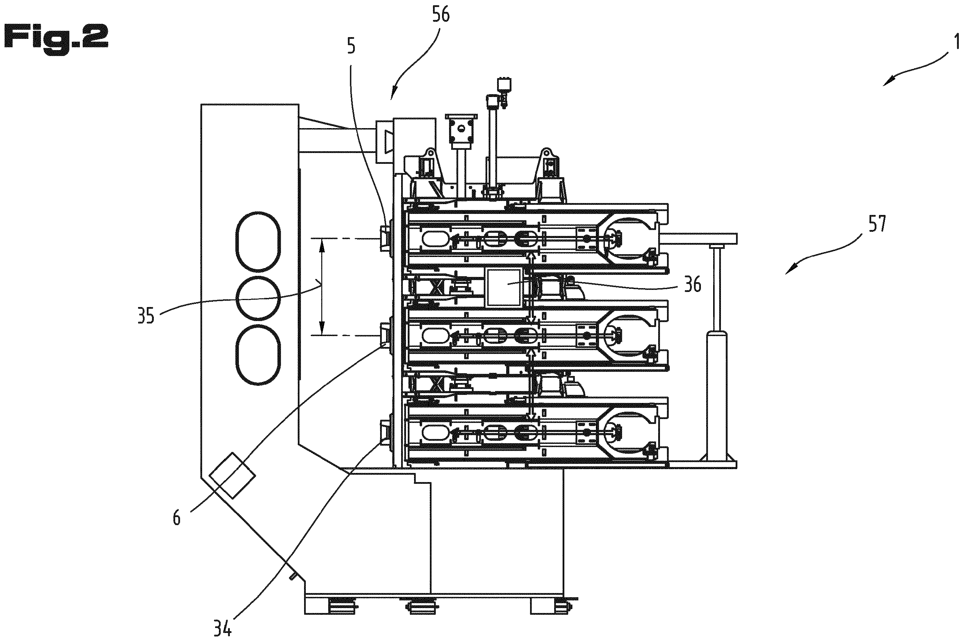

In einer weiteren, in Fig. 2 dargestellten Ausführungsvariante kann vorgesehen sein, dass die erste Arbeitsspindel 5 und die zweite Arbeitsspindel 6 an einer gemeinsamen Höhenverstelleinheit 14 angeordnet sind und somit gemeinsam entlang einer Y-Achse 11 verschiebbar sind. Bei dieser Ausführungsvariante wird für die gemeinsame Höhenverstelleinheiten 14 nur ein einzelner Antrieb benötigt.

Die Y-Achsen-Linearführung 15 kann ebenfalls eine Führungsschiene aufweisen, welche an der Hauptverstelleinheit 12 angeordnet ist und welche mit einem oder mehreren Führungsschlitten gekoppelt ist, die an der ersten Arbeitsspindel 5 bzw. der zweiten Arbeitsspindel 6 angeordnet sind.

Weiters kann, wie aus der Darstellung nach Fig. 1 ersichtlich, vorgesehen sein, dass die erste Arbeitsspindel 5 mittels einer ersten Z-Achsen-Linearführung 16 in der Z-Achse 9 verschiebbar ist und dass die zweite Arbeitsspindel 6 mittels einer zweiten Z-Achsen-Linearführung 16 in der Z-Achse 9 verschiebbar ist, wobei die erste Arbeitsspindel 5 und die zweite Arbeitsspindel 6 unabhängig voneinander verschiebbar sind.

Außerdem umfasst die Werkzeugmaschine 1 eine Werkstückspannvorrichtung 18, welche zur Aufnahme der zu bearbeitenden Werkstücke 32, 33 dient.

Die Werkstückspannvorrichtung 18 weist einen ersten Werkstücktisch 19 und einen zweiten Werkstücktisch 20 auf. Der erste Werkstücktisch 19 ist bezüglich einer ersten Schwenkachse 21 relativ zum Maschinengestell 2 verschwenkbar. Der zweite Werkstücktisch 20 ist bezüglich einer zweiten Schwenkachse 22 relativ zum Maschinengestell 2 verschwenkbar.

Die beiden Schwenkachsen 21, 22 der beiden Werkstücktische 19, 20 sind parallel zur X-Achse 10 angeordnet. Insbesondere ist vorgesehen, dass der erste Werkstücktisch 19 zur Aufnahme des ersten Werkstückes 32 dient und der zweite Werkstücktisch 20 zur Aufnahme des zweiten Werkstückes 33 dient.

Insbesondere kann vorgesehen sein, dass das erste Werkstück 32 und das zweite Werkstück 33 in deren Außenkontur gleich zueinander ausgebildet sind und an den beiden Werkstücken 32, 33 die gleichen Bearbeitungsschritte durchgeführt werden. Die beiden Werkstücktische 19, 20 sind der Übersichtlichkeit halber in Fig. 1 ebenfalls nur rudimentär dargestellt. Natürlich können verschiedenste Befestigungsmöglichkeiten zur Befestigung der Werkstücke 32, 33 an den Werkstücktischen 19, 20 vorgesehen sein. Insbesondere kann vorgesehen sein, dass an den beiden Werkstücktischen 19, 20 jeweils Rundtische ausgebildet sind, welche zur Befestigung der Werkstücke 32, 33 und gleichzeitig zum Verdrehen der der Werkstücke 32, 33 relativ zu den Werkstücktischen 19, 20 dienen.

Der erste Werkstücktisch 19 ist mittels einer ersten Schwenklagerung 23 und einer zweiten Schwenklagerung 24 drehbar am Maschinengestell 2 gelagert. Analog dazu ist der zweite Werkstücktisch 20 mittels einer ersten Schwenklagerung 25 und einer zweiten Schwenklagerung 26 drehbar am Maschinengestell 2 gelagert. Die Schwenklagerungen 23, 24, 25, 26 können beispielsweise in Form von Lagerböcken ausgebildet sein, welche entsprechenden Aufnahmen am Werkstücktisch 19 befestigt sind.

Wie aus Fig. 1 ersichtlich, kann vorgesehen sein, dass der erste Werkstücktisch 19 einen Werkstückspannbereich aufweist, welcher sich zwischen der ersten Schwenklagerung 23 und der zweiten Schwenklagerung 24 erstreckt. Analog dazu kann vorgesehen sein, dass der zweite Werkstücktisch 20 einen Werkstückspannbereich aufweist, welcher sich zwischen der ersten Schwenklagerung 25 und der zweiten Schwenklagerung 26 des zweiten Werkstücktisches 20 erstreckt.

Der Werkstückspannbereich des ersten Werkstücktisches 19 weist eine Werkstückspannlänge 27 auf. Der Werkstückspannbereich des zweiten Werkstücktisches 20 weist eine Werkstückspannlänge 28 auf. Vorzugsweise ist vorgesehen, dass der erste Werkstücktisch 19 und der zweite Werkstücktisch 20 gleich ausgebildet sind.

Die beiden Werkstücktische 19, 20 bzw. die beiden Schwenkachsen 21, 22 sind in einem Abstand 29 zueinander angeordnet. Der Abstand 29 erstreckt sich ebenfalls in Richtung der Y-Achse 11. Durch die beschriebene Ausprägung wird erreicht, dass die erste Arbeitsspindel 5 dem ersten Werkstücktisch 19 zugeordnet ist und dass die zweite Arbeitsspindel 6 dem zweiten Werkstücktisch 20 zugeordnet ist.

Insbesondere kann vorgesehen sein, dass in der Werkstückspannvorrichtung 18 eine Verstellvorrichtung angeordnet ist, mittels welcher der Abstand 29 der beiden Werkstücktische 19, 20 bzw. der beiden Schwenkachsen 21, 22 zueinander verstellt werden kann.

Mittels der erfindungsgemäßen Werkzeugmaschine 1 können zwei Werkstücke 32, 33, die baugleich ausgebildet sind, parallel zueinander bearbeitet werden. Hierbei wird das erste Werkstück 32 am ersten Werkstücktisch 19 und das zweite Werkstück 33 am zweiten Werkstücktisch 20 gespannt. Das Werkzeug der ersten Arbeitsspindel 5 bearbeitet das erste Werkstück 32 und das Werkzeug der zweiten Arbeitsspindel 6 bearbeitet das zweite Werkstück 33. Durch den erfindungsgemäßen Aufbau der Werkzeugmaschine 1 erfolgt die Bearbeitung des ersten Werkstückes 32 und des zweiten Werkstückes 33 synchron. Somit können mittels einer möglichst einfach aufgebauten Werkzeugmaschine 1 zwei Werkstücke 32, 33 gleichzeitig bearbeitet werden, wodurch die Auslastung der Werkzeugmaschine 1 bzw. deren Produktivität verbessert werden kann.

Darüber hinaus ist vorgesehen, dass der erste Werkstücktisch 19 eine Antriebseinheit zum Verschwenken aufweist und der zweite Werkstücktisch 20 ebenfalls eine Antriebseinheit 30 zum Verschwenken aufweist. Bei einem derartigen Ausführungsbeispiel können der erste Werkstücktisch 19 und der zweite Werkstücktisch 20 unabhängig voneinander verschwenkt werden.

Die Antriebseinheit 30 kann beispielsweise in Form eines Torquemotors ausgebildet sein.

In wieder einer andern Alternativvariante kann vorgesehen sein, dass der Rotor des Torquemotors direkt in den Werkstücktischen 19, 20 integriert ist und somit je Werkstücktisch 19, 20 ein eigener Torquemotor ausgebildet ist.

Weiters kann vorgesehen sein, dass die beiden Arbeitsspindeln 5, 6 von einer gemeinsamen Antriebseinheit 31 angetrieben werden. Die Antriebseinheit 31 kann beispielsweise durch einen Drehstromasynchronmotor gebildet sein, welcher mit einem Frequenzumrichter angesteuert wird.

Weiters ist es auch denkbar, dass die Antriebseinheit 31 in Form eines Synchronmotors ausgebildet ist.

Natürlich kann auch vorgesehen sein, dass jede der Arbeitsspindeln 5, 6 von einer eigenen Antriebseinheit 31 angetrieben wird. Hierbei kann vorgesehen sein, dass die Arbeitsspindel 5, 6 gleichzeitig der Läufer der Antriebseinheit 31 ist.

Die Arbeitsspindeln 5, 6 der in Fig. 1 dargestellten Werkzeugmaschine 1 sind bezüglich der Z-Achse 9, der X-Achse 10 und der Y-Achse 11 verschiebbar und bezüglich einer Parallelen zur Y-Achse verschwenkbar. Die in den Werkstücktischen 19, 20 aufgenommenen Werkstücke 32, 33 sind bezüglich einer Parallelen zur X-Achse 10 verschwenkbar. Somit weisen die Arbeitsspindeln 5, 6 fünf Freiheitsgrade bezüglich der Verstellung relativ zum bearbeitenden Werkstück 32, 33 auf.

Weiters kann vorgesehen sein, dass zumindest eine der Arbeitsspindeln 5, 6 einzeln und unabhängig von der anderen Arbeitsspindel 5, 6 in einer Axialrichtung der Spindelachse 7, 8 der Arbeitsspindel 5, 6 relativ zum Arbeitskopf 4 verstellbar ausgebildet ist. In einer Weiterbildung kann vorgesehen sein, dass beide Arbeitsspindeln 5, 6 in einer Axialrichtung der Spindelachse 7, 8 der Arbeitsspindel 5, 6 relativ zum Arbeitskopf 4 verstellbar ausgebildet sind.

In der Fig. 2 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Insbesondere wird darauf hingewiesen, dass das Ausführungsbeispiel jener Werkzeugmaschine 1, welche in Fig. 2 dargestellt ist, die gleichen Merkmale oder zumindest teilweise die gleichen Merkmale wie jenes Ausführungsbeispiel der Werkzeugmaschine 1, welche in Fig. 1 dargestellt ist aufweisen kann.

Wie aus Fig. 2 ersichtlich, kann vorgesehen sein, dass zusätzlich zur ersten Arbeitsspindel 5 und zur zweiten Arbeitsspindel 6 eine dritte Arbeitsspindel 34 ausgebildet ist, wobei die erste Arbeitsspindel 5, die zweite Arbeitsspindel 6 und die dritte Arbeitsspindel 34 vertikal übereinander angeordnet sind.

Unabhängig von der Ausbildung einer dritten Arbeitsspindel 34 kann vorgesehen sein, dass ein Abstand 35 zwischen der ersten Arbeitsspindel 5 und der zweiten Arbeitsspindel 6 mittels einer Spindelabstandskompensationsvorrichtung 36 in der vertikalen Y-Achse 11 verstellbar ist.

Wie aus Fig. 2 weiters ersichtlich, kann vorgesehen sein, dass eine weitere X-Achsen-Linearführung 56 ausgebildet ist, welche von der X-Achsen-Linearführung 13 distanziert angeordnet ist. Insbesondere kann vorgesehen sein, dass die X-Achsen-Linearführung 13 an einem unteren Abschnitt der Höhenverstelleinheit 14 angeordnet ist und dass die weitere X-Achsen-Linearführung 56 an einem oberen Abschnitt der Höhenverstelleinheit 14 angeordnet ist. Wie aus Fig. 2 weiters ersichtlich, kann vorgesehen sein, dass die weitere X-Achsen-Linearführung 56 mit der Werkstückspannvorrichtung gekoppelt ist. Durch die in diesem Absatz beschriebenen Maßnahmen kann eine weitere Stabilisierung der Höhenverstelleinheit 14 und somit eine Verbesserung der Genauigkeit der Werkzeugmaschine 1 erreicht werden.

Wie in Fig. 2 schematisch angedeutet, kann vorgesehen sein, dass eine Hubunterstützung 57 ausgebildet ist, welche zwischen der Hauptverstelleinheit 12 und einer der Arbeitsspindeln 5, 6, 34 wirkt. Durch die Hubunterstützung 57 kann die Gewichtskraft der Arbeitsspindeln 5, 6, 34 zumindest teilweise ausgeglichen werden, wodurch die Energieeffizienz Werkzeugmaschine 1 verbessert werden kann. Die Hubunterstützung 57 kann beispielsweise in Form eines Pneumatikzylinders mit einem Druckspeicher ausgebildet sein. Weiters ist es natürlich auch denkbar, dass die Hubunterstützung 57 beispielsweise in Form eines Gegengewichtes ausgebildet ist, welches mittels eines Zugmittels über eine Umlenkung mit der Arbeitsspindel 5, 6, 34 gekoppelt ist. Insbesondere kann vorgesehen sein, dass für jede der Arbeitsspindeln 5, 6, 34 eine eigene Hubunterstützung 57 ausgebildet ist.

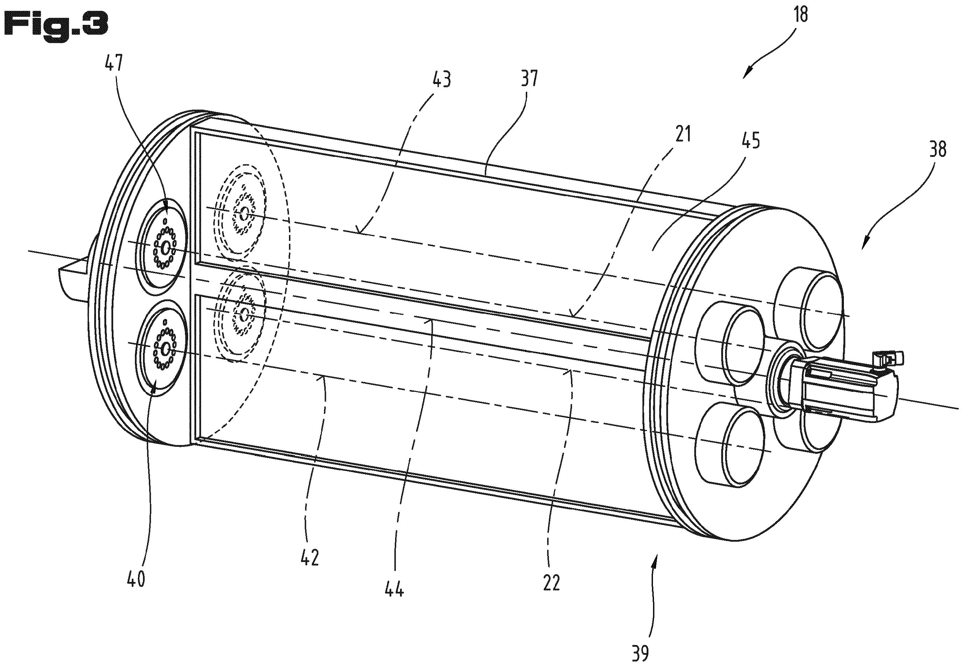

In der Fig. 3 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass die Werkstückspannvorrichtung 18 eine Schwenkbrücke 37 aufweist, an welcher an einer ersten Seite 38 der erste Werkstücktisch 19 und der zweite Werkstücktisch 20 angeordnet sind. An einer zweiten Seite 39 der Schwenkbrücke 37 sind ein erster rückwärtiger Werkstücktisch 40 und einen zweiter rückwärtiger Werkstücktisch 41 ausgebildet.

Der erste rückwärtige Werkstücktisch 40 ist um eine erste rückwärtige Schwenkachse 42, welche parallel zu der horizontalen X-Achse 10 ausgerichtet ist, schwenkbar gelagert.

Der zweite rückwärtige Werkstücktisch 41 ist um eine zweite rückwärtige Schwenkachse 43, welche parallel zur X-Achse 10 ausgerichtet ist, schwenkbar gelagert.

Weiters ist vorgesehen, dass die Schwenkbrücke 37, um eine parallel zur X-Achse 10 ausgerichtete Schwenkbrückenachse 44 schwenkbar gelagert ist, sodass je nach Schwenkstellung der Schwenkbrücke 37
die erste Arbeitsspindel 5 dem ersten Werkstücktisch 19 zugeordnet ist und die zweite Arbeitsspindel 6 dem zweiten Werkstücktisch 20 zugeordnet ist oder
die erste Arbeitsspindel 5 dem ersten rückwärtigen Werkstücktisch 40 zugeordnet ist und die zweite Arbeitsspindel 6 dem zweiten rückwärtigen Werkstücktisch 41 zugeordnet ist.

Mit anderen Worten ausgedrückt, kann entweder die erste Seite 38 der Schwenkbrücke 37 oder die zweite Seite 39 der Schwenkbrücke 37 in den Bearbeitungsraum der Werkzeugmaschine 1 eingeschwenkt sein.

Wie in Fig. 3 schematisch angedeutet, kann vorgesehen sein, dass zwischen der ersten Seite 38 der Schwenkbrücke 37 und der zweiten Seite 39 der Schwenkbrücke 37 eine Trennwand 45 ausgebildet ist. Die Trennwand 45 kann als Blechkonstruktion ausgebildet sein.

Insbesondere kann vorgesehen sein, dass die Schwenkbrücke 37 derart in der Werkzeugmaschine 1 aufgenommen ist, dass die Trennwand 45 zusammen mit einer Einhausung der Werkzeugmaschine 1 den Bearbeitungsraum der Werkzeugmaschine abschließt, sodass dieser von außen nicht zugänglich ist.

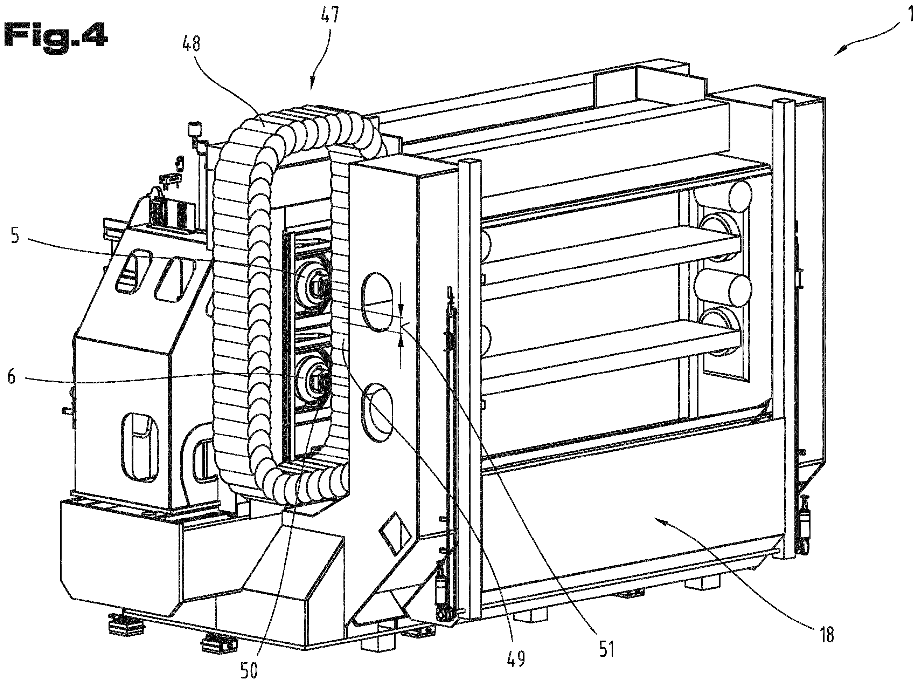

In der Fig. 4 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass an einem Längsende 46 der Werkstückspannvorrichtung 18 ein Werkzeugmagazin 47 angeordnet ist. Das Werkzeugmagazin 47 umfasst ein Kettenumlaufmagazin 48, wobei ein gerades Trum 49 des Kettenumlaufmagazines 48 vertikal ausgerichtet ist. Die erste Arbeitsspindel 5 und die zweite Arbeitsspindel 6 sind bis zum geraden Trum 49 des Kettenumlaufmagazines 48 verschiebbar. Die Bearbeitungswerkzeuge 50 können somit direkt mittels der ersten Arbeitsspindel 5 bzw. der zweiten Arbeitsspindel 6 aus dem Kettenumlaufmagazin 48 herausgenommen werden, bzw. in dieses abgelegt werden.

Insbesondere kann vorgesehen sein, dass der Abstand 35 zwischen der ersten Arbeitsspindel 5 und der zweiten Arbeitsspindel 6 einer Teilung 51 oder einem Vielfachen der Teilung 51 des Kettenumlaufmagazines 48 entspricht. Als Teilung 51 wird der Abstand der einzelnen Bearbeitungswerkzeugaufnahmen 52 des Kettenumlaufmagazines 48 bezeichnet.

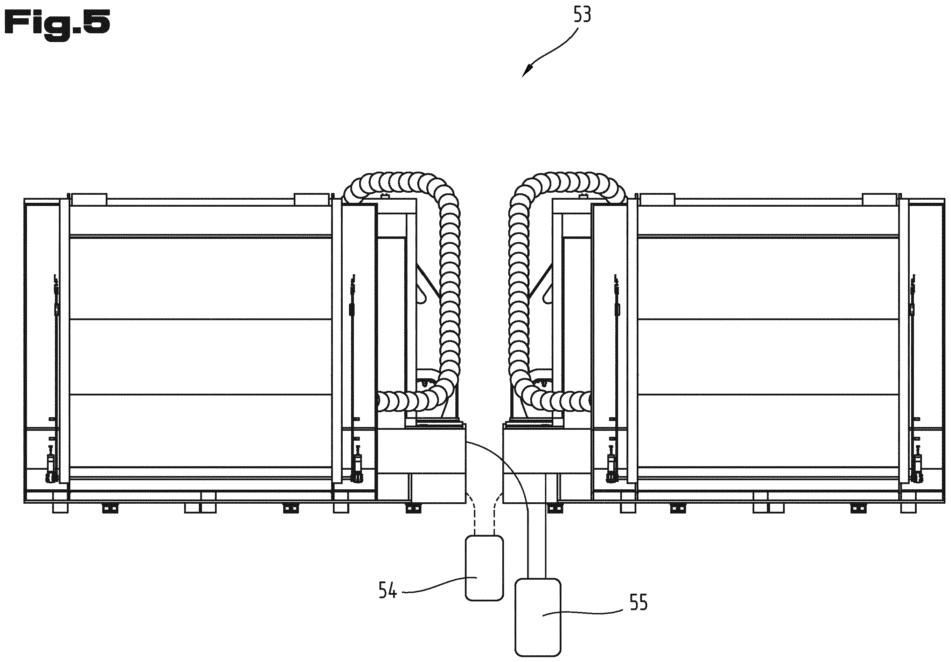

In der Fig. 5 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass eine Bearbeitungsanlage 53 ausgebildet ist, in welcher zumindest zwei der Werkzeugmaschinen 1 nebeneinander aufgestellt sind. Insbesondere kann vorgesehen sein, dass für beide Werkzeugmaschinen 1 eine gemeinsame Steuerungstechnik 54 und/oder eine gemeinsame Medienversorgung 55 ausgebildet ist.

Im Ausführungsbeispiel nach Fig. 5 sind die beiden Werkzeugmaschinen 1 gespiegelt ausgebildet.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Werkzeugmaschine | 26 | zweite Schwenklagerung zweiter Werkstücktisch |
| 2 | Maschinengestell | | |
| 3 | gemeinsame Spindelverstellvorrichtung | 27 | Werkstückspannlänge Werkstückspannbereich erster Werk-stücktisch |
| 4 | Arbeitskopf | | |
| 5 | erste Arbeitsspindel | 28 | Werkstückspannlänge Werk-stückspannbereich zweiter Werk-stücktisch |
| 6 | zweite Arbeitsspindel | | |
| 7 | erste Spindelachse | | |
| 8 | zweite Spindelachse | 29 | Abstand Werkstücktische |
| 9 | Z-Achse | 30 | Antriebseinheit Werkstücktische |
| 10 | X-Achse | 31 | Antriebseinheit Arbeitsspindeln |
| 11 | Y-Achse | 32 | erstes Werkstück |
| 12 | Hauptverstelleinheit | 33 | zweites Werkstück |
| 13 | X-Achsen-Linearführung | 34 | dritte Arbeitsspindel |
| 14 | Höhenverstelleinheit | 35 | Abstand erste Arbeitsspindel zweite Arbeitsspindel |
| 15 | Y-Achsen-Linearführung | | |
| 16 | Z-Achsen-Linearführung | 36 | Spindelabstandskompensations-vorrichtung |
| 17 | Schwenklagerung Arbeitskopf | | |
| 18 | Werkstückspannvorrichtung | 37 | Schwenkbrücke |
| 19 | erster Werkstücktisch | 38 | erste Seite der Schwenkbrücke |
| 20 | zweiter Werkstücktisch | 39 | zweite Seite der Schwenkbrücke |
| 21 | erste Schwenkachse | 40 | erster rückwärtiger Werkstücktisch |
| 22 | zweite Schwenkachse | 41 | zweiter rückwärtiger Werkstück-tisch |
| 23 | erste Schwenklagerung erster Werkstücktisch | | |
| | | 42 | erste rückwärtige Schwenkachse |
| 24 | zweite Schwenklagerung erster Werkstücktisch | 43 | zweite rückwärtige Schwenkachse |
| | | 44 | Schwenkbrückenachse |
| 25 | erste Schwenklagerung zweiter Werkstücktisch | 45 | Trennwand |
| | | 46 | Längsende |
| | | 47 | Werkzeugmagazin |
| 48 | Kettenumlaufmagazin | | |
| 49 | gerades Trum | | |
| 50 | Bearbeitungswerkzeug | | |
| 51 | Teilung | | |
| 52 | Bearbeitungswerkzeugaufnahme | | |
| 53 | Bearbeitungsanlage | | |
| 54 | Steuerungstechnik | | |
| 55 | Medienversorgung | | |
| 56 | weitere X-Achsen-Linearführung | | |
| 57 | Hubunterstützung | | |

## Patentansprüche

1. Werkzeugmaschine (1) umfassend:
ein Maschinengestell (2);
zumindest eine erste Arbeitsspindel (5), welche um eine erste Spindelachse (7) drehbar gelagert ist;
zumindest eine zweite Arbeitsspindel (6), welche um eine zweite Spindelachse (8) drehbar gelagert ist;
eine Werkstückspannvorrichtung (18), welche zum Aufnehmen zumindest eines ersten Werkstückes (32) und eines zweiten Werkstückes (33) ausgebildet ist,
wobei die erste Arbeitsspindel (5) und die zweite Arbeitsspindel (6) vertikal übereinander angeordnet sind
wobei die Werkstückspannvorrichtung (18) zumindest einen ersten Werkstücktisch (19) und einen zweiten Werkstücktisch (20) umfasst, wobei die erste Arbeitsspindel (5) dem ersten Werkstücktisch (19) zugeordnet ist und die zweite Arbeitsspindel (6) dem zweiten Werkstücktisch (20) zugeordnet ist, wobei der erste Werkstücktisch (19) um eine erste Schwenkachse (21), welche parallel zu einer horizontalen X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist, wobei der erste Werkstücktisch (19) eine Antriebseinheit zum Verschwenken aufweist und der zweite Werkstücktisch (20) ebenfalls eine Antriebseinheit (30) zum Verschwenken aufweist, so dass der erste Werkstücktisch (19) und der zweite Werkstücktisch (20) unabhängig voneinander verschwenkt werden können.

2. Werkzeugmaschine (1) nach Anspruch 1, **dadurch gekennzeichnet, dass** die erste Arbeitsspindel (5) und die zweite Arbeitsspindel (6) an einer gemeinsamen Z-Achsen-Linearführung (16) angeordnet sind und gemeinsam in einer parallel zu den Spindelachsen (7, 8) ausgerichteten Z-Achse (9) verschiebbar sind.

3. Werkzeugmaschine (1) nach Anspruch 1, **dadurch gekennzeichnet, dass** die erste Arbeitsspindel (5) mittels einer ersten Z-Achsen-Linearführung (16) in der Z-Achse (9) verschiebbar ist und dass die zweite Arbeitsspindel (6) mittels einer zweiten Z-Achsen-Linearführung (16) in der Z-Achse (9) verschiebbar ist, wobei die erste Arbeitsspindel (5) und die zweite Arbeitsspindel (6) unabhängig voneinander verschiebbar sind.

4. Werkzeugmaschine (1) nach einem der vorhergehenden Ansprüche, **dadurch gekennzeichnet, dass** zusätzlich zur ersten Arbeitsspindel (5) und zur zweiten Arbeitsspindel (6) eine dritte Arbeitsspindel (34) ausgebildet ist, wobei die erste Arbeitsspindel (5), die zweite Arbeitsspindel (6) und die dritte Arbeitsspindel (34) vertikal übereinander angeordnet sind.

5. Werkzeugmaschine (1) nach einem der Ansprüche 1 bis 4, **dadurch gekennzeichnet, dass** die Werkstückspannvorrichtung (18) zumindest einen ersten rückwärtigen Werkstücktisch (40) und einen zweiten rückwärtigen Werkstücktisch (41) umfasst, wobei der erste rückwärtige Werkstücktisch (40) um eine erste rückwärtige Schwenkachse (42), welche parallel zu einer horizontalen X-Achse (10) ausgerichtet ist, schwenkbar gelagert ist und der zweite rückwärtige Werkstücktisch (41) um eine zweite rückwärtige Schwenkachse (43), welche parallel zur X-Achse (10) ausgerichtet ist, schwenkbar gelagert ist und dass der erste Werkstücktisch (19) und der zweite Werkstücktisch (20) an einer ersten Seite (38) einer Schwenkbrücke (37), welche um eine parallel zur X-Achse (10) ausgerichtete Schwenkbrückenachse (44) schwenkbar gelagert ist, angeordnet sind und dass der erste rückwärtige Werkstücktisch (40) und der zweite rückwärtige Werkstücktisch (41) an einer zweiten Seite (39) der Schwenkbrücke (37) angeordnet sind, wobei je nach Schwenkstellung der Schwenkbrücke (37)
die erste Arbeitsspindel (5) dem ersten Werkstücktisch (19) zugeordnet ist und die zweite Arbeitsspindel (6) dem zweiten Werkstücktisch (20) zugeordnet ist oder
die erste Arbeitsspindel (5) dem ersten rückwärtigen Werkstücktisch (40) zugeordnet ist und die zweite Arbeitsspindel (6) dem zweiten rückwärtigen Werkstücktisch (41) zugeordnet ist.

6. Werkzeugmaschine (1) nach Anspruch 5, **dadurch gekennzeichnet, dass** die Schwenkbrückenachse (44) zentral zwischen der ersten Schwenkachse (21), der zweiten Schwenkachse (22), der ersten rückwärtigen Schwenkachse (42) und der zweiten rückwärtigen Schwenkachse (43) angeordnet ist.

7. Werkzeugmaschine (1) nach Anspruch 5 oder 6, **dadurch gekennzeichnet, dass** zwischen der ersten Seite (38) der Schwenkbrücke (37) und der zweiten Seite (39) der Schwenkbrücke (37) eine Trennwand (45) ausgebildet ist, wobei im Bearbeitungszustand der Werkzeugmaschine (1) durch die Trennwand (45) ein Arbeitsraum der Werkzeugmaschine (1) von einem Außenbereich der Werkzeugmaschine (1) abgetrennt ist.

8. Werkzeugmaschine (1) nach einem der vorhergehenden Ansprüche, **dadurch gekennzeichnet, dass** ein Abstand (35) zwischen der ersten Arbeitsspindel (5) und der zweiten Arbeitsspindel (6) mittels einer Spindelabstandskompensationsvorrichtung (36) in einer vertikalen Y-Achse (11) verstellbar ist.

9. Werkzeugmaschine (1) nach einem der vorhergehenden Ansprüche, **dadurch gekennzeichnet, dass** an einem Längsende (46) der Werkstückspannvorrichtung (18) ein Werkzeugmagazin (47) angeordnet ist, wobei das Werkzeugmagazin (47) ein Kettenumlaufmagazin (48) umfasst, wobei ein gerades Trum (49) des Kettenumlaufmagazines (48) vertikal ausgerichtet ist, wobei die erste Arbeitsspindel (5) und die zweite Arbeitsspindel (6) zum geraden Trum (49) des Kettenumlaufmagazines (48) verschiebbar sind, wobei ein Abstand (35) zwischen der ersten Arbeitsspindel (5) und der zweiten Arbeitsspindel (6) einer Teilung (51) oder einem Vielfachen der Teilung (51) des Kettenumlaufmagazines (48) entspricht.

10. Werkzeugmaschine (1) nach Anspruch 1, **dadurch gekennzeichnet, dass** je Werkstücktisch (19, 20) ein eigener Torquemotor ausgebildet ist, wobei jeweils der Rotor des Torquemotors direkt in den Werkstücktischen (19, 20) integriert ist.

11. Verfahren zum Betreiben einer Werkzeugmaschine (1) mit einem Maschinengestell (2), einer ersten Arbeitsspindel (5), welche um eine erste Spindelachse (7) drehbar gelagert ist, zumindest einer zweiten Arbeitsspindel (6), welche um eine zweite Spindelachse (8) drehbar gelagert ist und einer Werkstückspannvorrichtung (18), welche zum Aufnehmen zumindest eines ersten Werkstückes (32) und eines zweiten Werkstückes (33) ausgebildet ist, wobei die erste Arbeitsspindel (5) und die zweite Arbeitsspindel (6) vertikal übereinander angeordnet sind, wobei die Werkstückspannvorrichtung (18) zumindest einen ersten Werkstücktisch (19) und einen zweiten Werkstücktisch (20) umfasst, wobei der erste Werkstücktisch (19) um eine erste Schwenkachse (21), welche parallel zu einer horizontalen X-Achse (10) ausgerichtet ist, schwenkbar gelagert ist und der zweite Werkstücktisch (20) um eine zweite Schwenkachse (22), welche parallel zur X-Achse (10) ausgerichtet ist, schwenkbar gelagert ist und wobei
die erste Arbeitsspindel (5) dem ersten Werkstücktisch (19) zugeordnet ist und
die zweite Arbeitsspindel (6) dem zweiten Werkstücktisch (20) zugeordnet ist, wobei der erste Werkstücktisch (19) eine Antriebseinheit zum Verschwenken aufweist und der zweite Werkstücktisch (20) ebenfalls eine Antriebseinheit (30) zum Verschwenken aufweist, so dass der erste Werkstücktisch (19) und der zweite Werkstücktisch (20) unabhängig voneinander verschwenkt werden können, umfassend
die Verfahrensschritte:
- Bearbeiten des ersten Werkstückes (32) mittels der ersten Arbeitsspindel (5);
- Bearbeiten des zweiten Werkstückes (33) mittels der zweiten Arbeitsspindel (6),
**dadurch gekennzeichnet, dass**
das Bearbeiten des ersten Werkstückes (32) und das Bearbeiten des zweiten Werkstückes (33) zeitgleich erfolgt.

12. Verfahren nach Anspruch 11, **dadurch gekennzeichnet, dass** ein Wechseln des in der ersten Arbeitsspindel (5) gespannten Bearbeitungswerkzeuges (50) und ein Wechseln des in der zweiten Arbeitsspindel (6) gespannten Bearbeitungswerkzeuges (50) zeitgleich erfolgt, wobei die Bearbeitungswerkzeuge (50) in einem Kettenumlaufmagazin (48) mit mehreren Bearbeitungswerkzeugaufnahmen (52) aufgenommen sind, wobei jene Bearbeitungswerkzeuge (50), welche in jenen Bearbeitungswerkzeugaufnahmen (52) angeordnet sind, die dem Abstand (35) zwischen der ersten Arbeitsspindel (5) und der zweiten Arbeitsspindel (6) entsprechen, baugleich ausgebildet sind, wobei in einem ersten Verfahrensschritt das in der ersten Arbeitsspindel (5) gespannte Bearbeitungswerkzeug (50) und das in der zweiten Arbeitsspindel (6) gespannte Bearbeitungswerkzeug (50) jeweils in eine freie Bearbeitungswerkzeugaufnahme (52) des Kettenumlaufmagazines (48) abgelegt werden und in einem zweiten Verfahrensschritt das Kettenumlaufmagazin (48) oder die beiden Arbeitsspindeln (5, 6) verschoben werden, sodass die erste Arbeitsspindel (5) und die zweite Arbeitsspindel (6) mit den neu aufzunehmenden Bearbeitungswerkzeugen (50) ausgerichtet sind und wobei in einem dritten Verfahrensschritt die neu aufzunehmenden Bearbeitungswerkzeuge (50) in die erste Arbeitsspindel (5) und in die zweite Arbeitsspindel (6) aufgenommen werden.

13. Verfahren nach Anspruch 11, **dadurch gekennzeichnet, dass** der erste Werkstücktisch (19) und der zweite Werkstücktisch (20) unabhängig voneinander verschwenkt werden.

14. Bearbeitungsanlage (53) umfassend zumindest zwei Werkzeugmaschinen (1), welche jeweils nach einem der Ansprüche 1 bis 10 ausgebildet sind, wobei für beide Werkzeugmaschinen (1) eine gemeinsame Steuerungstechnik (54) und/oder eine gemeinsame Medienversorgung (55) ausgebildet ist, wobei die beiden Werkzeugmaschinen (1) gespiegelt zueinander ausgebildet sind.

15. Verfahren zum Betreiben einer Bearbeitungsanlage (53) nach einem der Ansprüche 11 bis 14, **dadurch gekennzeichnet, dass** die beiden Werkzeugmaschinen (1) synchron zueinander betrieben werden.

## Claims

1. A machine tool (1) comprising:
a machine frame (2);
at least one first working spindle (5) which is pivotable about a first spindle axis (7);
at least one second working spindle (6) which is pivotable about a second spindle axis (8);
a workpiece clamping device (18) which is configured to receive at least a first workpiece (32) and a second workpiece (33),
wherein the first working spindle (5) and the second working spindle (6) are arranged vertically above one another,
wherein the workpiece clamping device (18) comprises at least a first workpiece table (19) and a second workpiece table (20), wherein the first working spindle (5) is assigned to the first workpiece table (19) and the second working spindle (6) is assigned to the second workpiece table (20),
wherein the first workpiece table (19) is pivotable about a first pivot axis (21), which is aligned parallel to a horizontal X-axis (10), and the second workpiece table (20) is pivotable about a second pivot axis (22), which is aligned parallel to the X-axis (10),
wherein the first workpiece table (19) has a drive unit for swiveling and the second workpiece table (20) also has a drive unit (30) for swiveling, so that the first workpiece table (19) and the second workpiece table (20) can be swiveled independently of each other.

2. The machine tool (1) according to claim 1, **characterized in that** the first working spindle (5) and the second working spindle (6) are arranged on a common Z-axis linear guide (16) and are jointly displaceable in a Z-axis (9) aligned parallel to the spindle axes (7, 8).

3. The machine tool (1) according to claim 1, **characterized in that** the first working spindle (5) is displaceable on the Z-axis (9) by means of a first Z-axis linear guide (16) and that the second working spindle (6) is displaceable on the Z-axis (9) by means of a second Z-axis linear guide (16), wherein the first working spindle (5) and the second working spindle (6) are displaceable independently of each other.

4. The machine tool (1) according to one of the preceding claims, **characterized in that**, in addition to the first working spindle (5) and to the second working spindle (6), a third working spindle (34) is formed, wherein the first working spindle (5), the second working spindle (6) and the third working spindle (34) are arranged vertically one above the other.

5. The machine tool (1) according to one of claims 1 to 4, **characterized in that** the workpiece clamping device (18) comprises at least a first rear workpiece table (40) and a second rear workpiece table (41), wherein the first rear workpiece table (40) is pivotable about a first rear pivot axis (42) which is aligned parallel to a horizontal X-axis (10), and the second rear workpiece table (41) is pivoted about a second rear pivot axis (43) which is aligned parallel to the X-axis (10), and that the first workpiece table (19) and the second workpiece table (20) are arranged on a first side (38) of a swivel bridge (37) which is pivoted about a swivel bridge axis (44) aligned parallel to the X-axis (10), and that the first rear workpiece table (40) and the second rear workpiece table (41) are arranged on a second side (39) of the swivel bridge (37), wherein depending on the swivel position of the swivel bridge (37)
the first working spindle (5) is assigned to the first workpiece table (19) and the second working spindle (6) is assigned to the second workpiece table (20), or
the first working spindle (5) is assigned to the first rear workpiece table (40) and the second working spindle (6) is assigned to the second rear workpiece table (41).

6. The machine tool (1) according to claim 5, **characterized in that** the swivel bridge axis (44) is arranged centrally between the first pivot axis (21), the second pivot axis (22), the first rear pivot axis (42), and the second rear pivot axis (43).

7. The machine tool (1) according to claim 5 or 6, **characterized in that** a partition wall (45) is formed between the first side (38) of the swivel bridge (37) and the second side (39) of the swivel bridge (37), wherein, in the processing state of the machine tool (1), a working area of the machine tool (1) is separated from an outer area of the machine tool (1) by the partition wall (45).

8. The machine tool (1) according to one of the preceding claims, **characterized in that** a distance (35) between the first working spindle (5) and the second working spindle (6) is adjustable in the vertical Y-axis (11) by means of a spindle distance compensation device (36).

9. The machine tool (1) according to one of the preceding claims, **characterized in that** a tool magazine (47) is arranged at a longitudinal end (46) of the workpiece clamping device (18), wherein the tool magazine (47) comprises a chain circulation magazine (48), wherein a straight run (49) of the chain circulation magazine (48) is aligned vertically, wherein the first working spindle (5) and the second working spindle (6) can be displaced to the straight run (49) of the chain circulation magazine (48), wherein a distance (35) between the first working spindle (5) and the second working spindle (6) corresponds to a pitch (51) or a multiple of the pitch (51) of the chain circulation magazine (48).

10. The machine tool (1) according to claim 1, **characterized in that** each workpiece table (19, 20) has its own torque motor, wherein the rotor of the torque motor is integrated directly into the workpiece tables (19, 20).

11. A method for operating a machine tool (1) with a machine frame (2), a first working spindle (5) which is pivotable about a first spindle axis (7), at least one second working spindle (6) which is pivotable about a second spindle axis (8), and a workpiece clamping device (18) which is configured to receive at least a first workpiece (32) and a second workpiece (33), wherein the first working spindle (5) and the second working spindle (6) are arranged vertically one above the other, wherein the workpiece clamping device (18) comprises at least a first workpiece table (19) and a second workpiece table (20), wherein the first workpiece table (19) is pivotable about a first pivot axis (21), which is aligned parallel to a horizontal X-axis (10), and the second workpiece table (20) is pivotable about a second pivot axis (22), which is aligned parallel to the X-axis (10), and wherein the first working spindle (5) is assigned to the first workpiece table (19) and the second working spindle (6) is assigned to the second workpiece table (20), wherein the first workpiece table (19) has a drive unit for swiveling and the second workpiece table (20) also has a drive unit (30) for swiveling, so that the first workpiece table (19) and the second workpiece table (20) can be swiveled independently of each other, comprising the method steps:
- machining the first workpiece (32) using the first working spindle (5);
- machining the second workpiece (33) using the second working spindle (6),
**characterized in that**
the machining of the first workpiece (32) and the machining of the second workpiece (33) is performed simultaneously.

12. The method according to Claim 11, **characterized in that** a change of the machining tool (50) clamped in the first working spindle (5) and a change of the machining tool (50) clamped in the second working spindle (6) is performed simultaneously, wherein the machining tools (50) are received in a chain circulation magazine (48) with multiple machining tool receptacles (52), wherein those machining tools (50) arranged in those machining tool receptacles (52) which correspond to the distance (35) between the first working spindle (5) and the second working spindle (6) are configured structurally identically, wherein in a first method step the machining tool (50) clamped in the first working spindle (5) and the machining tool (50) clamped in the second working spindle (6) are each deposited in a vacant machining tool receptacle (52) of the chain circulation magazine (48) and in a second method step the chain circulation magazine (48) or the two working spindles (5, 6) are displaced so that the first working spindle (5) and the second working spindle (6) are aligned with the machining tools (50) to be newly received and wherein in a third method step the machining tools (50) to be newly received are received in the first working spindle (5) and in the second working spindle (6).

13. The method according to claim 11, **characterized in that** the first workpiece table (19) and the second workpiece table (20) can be swiveled independently of each other.

14. A machining system (53) comprising at least two machine tools (1) which are each configured according to one of claims 1 to 10, wherein a common control technology (54) and/or a common media supply (55) is formed for both machine tools (1), wherein the two machine tools (1) are configured so as to be mirror-symmetric.

15. A method for operating a machining system (53) according to one of claims 11 to 14, **characterized in that** the two machine tools (1) are operated synchronously with each other.

## Revendications

1. Machine-outil (1) comprenant :
un châssis de machine (2) ;
au moins une première broche de travail (5) qui est logée de manière rotative autour d'un premier axe de broche (7) ;
au moins une deuxième broche de travail (6) qui est logée de manière rotative autour d'un deuxième axe de broche (8) ;
un dispositif de serrage de pièce (18) qui est conçu pour le logement d'au moins une première pièce (32) et une deuxième pièce (33),
dans laquelle la première broche de travail (5) et la deuxième axe de broche (6) sont disposées verticalement l'une au-dessus de l'autre,
dans laquelle le dispositif de serrage de pièce (18) comprend au moins une première table porte-pièce (19) et une deuxième table porte-pièce (20), dans laquelle la première broche de travail (5) correspond à la première table porte-pièce (19) et la deuxième broche de travail (6) correspond à la deuxième table porte-pièce (20), dans laquelle la première table porte-pièce (19) est logée de manière pivotante autour d'un premier axe de pivotement (21) qui est orienté parallèlement à un axe horizontal X (10) et la deuxième table porte-pièce (20) est logée de manière pivotante autour d'un deuxième axe de pivotement (22) qui est orienté parallèlement à l'axe horizontal X (10), dans laquelle la première table porte-pièce (19) comprend une unité d'entraînement pour le pivotement et la deuxième table porte-pièce (20) comprend également une unité d'entraînement (30) pour le pivotement, de sorte que la première table porte-pièce (19) et la deuxième table porte-pièce (20) peuvent être pivotées indépendamment l'une de l'autre.

2. Machine-outil (1) selon la revendication 1, **caractérisée en ce que** la première broche de travail (5) et la deuxième broche de travail (6) sont disposées sur un guidage linéaire d'axe Z (16) commun et peuvent être coulissées conjointement sur un axe Z (9) orienté parallèlement aux axes de broches (7, 8).

3. Machine-outil (1) selon la revendication 1, **caractérisée en ce que** la première broche de travail (5) peut être coulissée sur l'axe Z (9) au moyen d'un premier guidage linéaire d'axe Z (16) et **en ce que** la deuxième broche de travail (6) peut être coulissée sur l'axe Z (9) au moyen d'un deuxième guidage linéaire d'axe Z (16), dans laquelle la première broche de travail (5) et la deuxième broche de travail (6) peuvent être coulissées indépendamment l'une de l'autre.

4. Machine-outil (1) selon l'une des revendications précédentes, **caractérisée en ce que**, en plus de la première broche de travail (5) et de la deuxième broche de travail (6), une troisième broche de travail (34) est prévue, dans laquelle la première broche de travail (5), la deuxième broche de travail (6) et la troisième broche de travail (34) sont disposées verticalement les unes au-dessus des autres.

5. Machine-outil (1) selon l'une des revendications 1 à 4, **caractérisée en ce que** le dispositif de serrage de pièce (18) comprend au moins une première table porte-pièce arrière (40) et une deuxième table porte-pièce arrière (41), dans laquelle la première table porte-pièce arrière (40) est logée de manière pivotante autour d'un premier axe de pivotement arrière (42), qui est orienté parallèlement à un axe X horizontal (10) et la deuxième table porte-pièce arrière (41) est logée de manière pivotante autour d'un deuxième axe de pivotement arrière (43), qui est orienté parallèlement à l'axe X horizontal (10), et **en ce que** la première table porte-pièce (19) et la deuxième table porte-pièce (20) sont disposées sur un premier côté (38) d'un pont de pivotement (37), qui est logé de manière pivotante autour d'un axe de pont de pivotement (44) orienté parallèlement à l'axe X (10) et **en ce que** la première table porte-pièce arrière (40) et la deuxième table porte-pièce arrière (41) sont disposées sur un deuxième côté (39) du pont de pivotement (37), dans laquelle, selon la position de pivotement du pont de pivotement (37),
la première broche de travail (5) correspond à la première table porte-pièce (19) et la deuxième broche de travail (6) correspond à la deuxième table porte-pièce (20) ou
la première broche de travail (5) correspond à la première table porte-pièce arrière (40) et la deuxième broche de travail (6) correspond à la deuxième table porte-pièce arrière (41).

6. Machine-outil (1) selon la revendication 5, **caractérisée en ce que** l'axe de pont de pivotement (44) est disposé de manière centrale entre le premier axe de pivotement (21), le deuxième axe de pivotement (22), le premier axe de pivotement arrière (42) et le deuxième axe de pivotement arrière (43).

7. Machine-outil (1) selon la revendication 5 ou 6, **caractérisée en ce que**, entre le premier côté (38) du pont de pivotement (37) et le deuxième côté (39) du pont de pivotement (37), est prévue une cloison (45), dans laquelle, dans l'état d'usinage de la machine-outil (1), un espace de travail de la machine-outil (1) est séparé d'une partie extérieure de la machine-outil (1) par la cloison (45).

8. Machine-outil (1) selon l'une des revendications précédentes, **caractérisée en ce qu'**une distance (35) entre la première broche de travail (5) et la deuxième broche de travail (6) peut être ajustée au moyen d'un dispositif de compensation de distance entre broches (36) sur un axe Y vertical (11).

9. Machine-outil (1) selon l'une des revendications précédentes, **caractérisée en ce que**, au niveau d'une extrémité longitudinale (46) du dispositif de serrage de pièce (18), est disposé un magasin d'outils (47) comprend un magasin à circulation de chaîne (48), dans laquelle un tambour droit (49) du magasin à chaîne (48) est orienté verticalement, dans laquelle la première broche de travail (5) et la deuxième broche de travail (6) peuvent être coulissées vers le tambour droit (49) du magasin à circulation de chaîne (48), dans laquelle une distance (35) entre la première broche de travail (5) et la deuxième broche de travail (6) correspond à une division (51) ou à un multiple de la division (51) du magasin à circulation de chaîne (48).

10. Machine-outil (1) selon la revendication 1, **caractérisée en ce que**, pour chaque table porte-pièce (19, 20), est prévu un moteur à couple, dans laquelle le rotor du moteur à couple est intégré directement dans les tables porte-pièces (19, 20).

11. Procédé de fonctionnement d'une machine-outil (1) avec un châssis de machine (2), une première broche de travail (5), qui est logée de manière rotative autour d'un premier axe de broche (7), au moins une deuxième broche de travail (6), qui est logée de manière rotative autour d'un deuxième axe de broche (8) et un dispositif de serrage de pièce (18), qui est conçu pour le logement d'au moins une première pièce (32) et une deuxième pièce (33),
dans laquelle la première broche de travail (5) et la deuxième broche de travail (6) sont disposées verticalement l'une au-dessus de l'autre, dans laquelle le dispositif de serrage de pièce (18) comprend au moins une première table porte-pièce (19) et une deuxième table porte-pièce (20), dans laquelle la première table porte-pièce (19) est logée de manière pivotante autour d'un premier axe de pivotement (21) qui est orienté parallèlement à un axe X horizontal (10) et la deuxième table porte-pièce (20) est logée de manière pivotante autour d'un deuxième axe de pivotement (22) qui est orienté parallèlement à l'axe X horizontal (10) et dans laquelle la première broche de travail (5) correspond à la première table porte-pièce (19) et la deuxième broche de travail (6) correspond à la deuxième table porte-pièce (20), dans laquelle la première table porte-pièce (19) comprend une unité d'entraînement pour le pivotement et la deuxième table porte-pièce (20) comprend également une unité d'entraînement (30) pour le pivotement, de sorte que la première table porte-pièce (19) et la deuxième table porte-pièce (20) peuvent être pivotées indépendamment l'une de l'autre, comprenant les étapes suivantes :
- usinage de la première pièce (32) au moyen de la première broche de travail (5) ;
- usinage de la deuxième pièce (33) au moyen de la deuxième broche de travail (6), **caractérisé en ce que**
l'usinage de la première pièce (32) et l'usinage de la deuxième pièce (33) ont lieu simultanément.

12. Procédé selon la revendication 11, **caractérisé en ce qu'**un changement de l'outil d'usinage (50) serré dans la première broche de travail (5) et un changement de l'outil d'usinage (50) serré dans la deuxième broche de travail (6) ont lieu simultanément, dans laquelle les outils d'usinage (50) sont logés dans un magasin à circulation de chaîne (48) avec plusieurs logements d'outils d'usinage (52), dans lequel les outils d'usinage (50) qui sont disposés dans les logements d'outils d'usinage (52) qui correspondent à la distance (35) entre la première broche de travail (5) et la deuxième broche de travail (6), sont réalisés de manière identique, dans lequel, dans une première étape du procédé, l'outil d'usinage (50) serré dans la première broche de travail (5) et l'outil d'usinage (50) serré dans la deuxième broche de travail (6) sont déposés respectivement dans un logement d'outil d'usinage (52) libre du magasin à circulation de chaîne (48) et, dans une deuxième étape du procédé, le magasin à circulation de chaîne (48) ou les deux broches de travail (5, 6) sont déplacées, de sorte que la première broche de travail (5) et la deuxième broche de travail (6) sont orientées avec les outils d'usinage (50) à loger de nouveau et dans lequel, dans une troisième étape du procédé, les outils d'usinage (50) à loger de nouveau sont logés dans la première broche de travail (5) et la deuxième broche de travail (6).

13. Procédé selon la revendication 11, **caractérisé en ce que** la première table porte-pièce (19) et la deuxième table porte-pièce (20) sont pivotées indépendamment l'une de l'autre.

14. Installation d'usinage (53) comprenant au moins deux machines-outils (1), qui sont conçues respectivement selon l'une des revendications 1 à 10, dans laquelle, pour les deux machines-outils (1), est prévu un système de commande (54) commun et/ou une alimentation en fluides (55) commune, dans laquelle les deux machines-outils (1) sont conçues en miroir l'une par rapport à l'autre.

15. Procédé de fonctionnement d'une installation d'usinage (53) selon l'une des revendications 11 à 14, **caractérisé en ce que** les deux machines-outils (1) fonctionnement de manière synchrone l'une par rapport à l'autre.
